# EUROPÄISCHE PATENTSCHRIFT

(11) **EP 3 077 664 B1**
(45) Veröffentlichungstag und Bekanntmachung des Hinweises auf die Patenterteilung: **01.12.2021**
(21) Anmeldenummer: 14781562.5
(22) Anmeldetag: 08.10.2014
(51) Int. Cl.: F03D 80/80, H02G 3/00, A62C 2/00, H02G 15/18

(54) **WINDENERGIEANLAGE MIT KABELBRANDSCHUTZEINRICHTUNG**
WIND TURBINE COMPRISING A CABLE FIRE PROTECTION DEVICE
ÉOLIENNE MUNIE D'UN DISPOSITIF DE PROTECTION DES CÂBLES CONTRE LES INCENDIES

(30) Priorität: 29.11.2013 DE 102013224542
(43) Veröffentlichungstag der Anmeldung: 12.10.2016
(73) Patentinhaber: Senvion GmbH, 22297 Hamburg (DE)
(72) Erfinder: LÜTJEN, Jan, 25585 Lütjenwestedt (DE)
(74) Vertreter: Glawe, Delfs, Moll
(86) Internationale Anmeldenummer: PCT/EP2014/071567
(87) Internationale Veröffentlichungsnummer: WO 2015/078626

(56) Entgegenhaltungen:
- CN-A- 102 872 556
- CN-U- 202 004 415
- DE-T2- 69 617 592
- GB-A- 954 235
- US-A1- 2010 247 326
- US-A1- 2011 200 290

## Beschreibung

Die Erfindung betrifft eine Windenergieanlage mit einer Kabelbrandschutzeinrichtung sowie die Kabelbrandschutzeinrichtung selbst. Die Windenergieanlage umfasst einen Turm mit einer an dessen oberen Ende angeordneten Gondel mit einem Generator sowie einen Windrotor zum Antrieb des Generators. In dem Turm laufen von einem Fuß des Turms Kabel zu dem oberen Turmende.

Zur Gewährleistung einer ausreichend großen Bodenfreiheit auch bei Windrotoren mit großen Blattlängen einerseits und zur Erreichung von gleichmäßigeren und kräftigeren Windströmungen oberhalb der turbulenten Bodenschicht sind Windenergieanlagen mit einem Turm versehen, auf dem die Gondel mit dem Windrotor angeordnet ist. Somit handelt es sich bei Windenergieanlagen um vertikal ausgedehnte Bauten. Zur Versorgung sowie Steuerung der Einbauten in der Gondel bzw. zum Abtransport der dort erzeugten elektrischen Energie verläuft mindestens ein, in der Regel mehrere Kabel vom Fuß zur Gondel. Aufgrund der Höhe des Turms ist die Gondel in der Regel nur durch den Turm der Windenergieanlage zugänglich, und nicht von außen. Somit besteht auch häufig nicht die Möglichkeit einer Brandlöschung von außen. Daher spielt Brandschutz bei der Konstruktion von Windenergieanlagen eine bedeutende Rolle.

Es ist jedoch nicht allein die durch den Turm erreichte Höhe, welche unter Brandschutzgesichtspunkten problematisch ist. Denn außerdem wird durch den Turm bei Ausbruch eines Feuers in dessen unterem Bereich ein ausgeprägter Kamineffekt verursacht. Dadurch wird eine Brandausbreitung vom Turmfuß bis hoch in die Gondel stark begünstigt. Es besteht die Gefahr, dass auch an sich eher kleinere Brände im unteren Bereich des Turms zu letztlich einem Totalschaden der Windenergieanlage führen.

Zum Schutz vor Brandausbreitung ist es bekannt, Zwischenböden in den Turm einzuziehen. Sie fungieren als Schott und verhindern eine Ausweitung des Brands. Nachteilig daran ist, dass wegen erforderlicher Durchbrüche in dem Zwischenboden für Leitungen und Zugangswege eine Abschottung nur schwer zu erreichen ist. Gerade im Hinblick auf die Durchbrüche für Steigeinrichtungen, wie Leitern oder Fahrkörbe, ist dies praktisch kaum durchführbar. Daher ist auch bei Ausrüstung mit den Schotts eine Brandausbreitung in der Vertikalen kaum zu verhindern. Dies gilt insbesondere für die Kabel im Turm, zumal in Vertikalrichtung selbstlöschende Kabel kaum wirtschaftlich vertretbar erhältlich sind.

US2010/247326A1, CN202004415U und GB2077382 zeigen Beispiele einer Kabelmanschette zum Brandschutz von Kabeln.

Der Erfindung liegt die Aufgabe zu Grunde, den Brandschutz im Turm einer Windenergieanlage zu verbessern.

Die erfindungsgemäße Lösung liegt in den Merkmalen des unabhängigen Anspruchs 1. Vorteilhafte Weiterbildungen sind Gegenstand der abhängigen Ansprüche.

Bei einer Windenergieanlage mit einem Turm, einer an dessen oberen Ende angeordneten Gondel mit einem Generator und einem zu dessen Antrieb an deren Stirnseite drehbar angeordneten Rotor zum Antrieb des Generators, wobei von einem Turmfuß mindestens ein Kabel zu dem oberen Turmende verläuft, ist erfindungsgemäß vorgesehen eine stangenförmige Manschette für das Kabel umfassend ein feuerfestes Steigrohr mit einer feuerfesten Dichtung in dessen oberen Bereich , durch welche das mindestens eine Kabel geführt ist, wobei die Weite des Steigrohrs so bemessen ist, dass das mindestens eine Kabel von einem Freiraum umgeben ist.

Die Erfindung beruht auf dem Gedanken, mit der stangenförmigen Manschette ein für Flammen am Kabel nicht überwindbares Hindernis zur vertikalen Ausbreitung als Brandschleuse bereitzustellen. Bei einem Kabelbrand läuft die Flamme am Kabel von unten her in den Freiraum des Steigrohrs ein. Jedoch kann sie aus diesem nicht mehr austreten, da es im oberen Bereich des Steigrohrs durch die dort vorgesehene feuerfeste Dichtung gestoppt ist.

Die Erfindung hat erkannt, dass es ein Zusammenspiel von drei Faktoren ist, welches auf diese Weise den Brand im Kabel sicher stoppt. Der erste Faktor besteht darin, dass der Sauerstoff im Freiraum verbraucht wird, sowie die Flamme von unten in das Steigrohr einläuft, und wegen des Abschlusses durch die feuerfeste Dichtung vom oberen Ende kein weiterer Sauerstoff nachströmen kann. Die Wirkung ist also Sauerstoffentzug, so dass eine inerte Atmosphäre entsteht. Der zweite Faktor besteht darin, dass das Kabel umgebende Steigrohr mit seiner Masse eine thermische Last bildet, da es von dem in das Steigrohr einlaufenden Brandherd aufgewärmt werden muss. Dies gilt umso mehr, je schwerer und massiver die erfindungsgemäße Manschette ausgeführt ist und je größer ihre Wärmekapazität und -leitungsfähgikeit ist. Insgesamt wird durch diese thermische Last die Brandstelle abgekühlt. Der dritte Faktor besteht darin, dass das Steigrohr aufgrund seiner Länge ein unmittelbares Überspringen des Brands bzw. der Flammen von dem unteren Ende der Manschette zum oberen Ende verhindert. Der Brand kann sich daher nur weiter entlang des Kabels ausbreiten, wobei er - wie vorstehend beschrieben - im oberen Bereich des Zentralrohrs in einer Art "Sackgasse" läuft und dort gestoppt wird.

Durch das Zusammenwirken dieser drei Faktoren wird eine sichere Brandverlöschung gerade bei den bisher problematischen vertikal verlaufenden Kabeln erzielt. Die erfindungsgemäße Manschette kann nachträglich über an sich beliebige Kabel gesteckt werden. Veränderungen des Kabels sind dazu nicht erforderlich. Der Aufwand für den somit erreichten Brandschutz ist damit ausgesprochen gering. Die Manschette eignet sich sogar zur Nachrüstung bestehender Anlagen. Insgesamt erreicht die Erfindung somit auf frappierend einfache Weise einen sehr wirksamen Schutz gegen die bisher äußerst kritische vertikale Brandausbreitung entlang vertikal verlaufender Kabel.

Bei der stangenförmigen Manschette kommt es nicht auf ihre Querschnittsform an. Diese kann an sich beliebig sein, insbesondere rund oder auch eckig sein.

Um ein Überspringen des Brandes auch bei einer eher kurzen Ausführung des Steigrohrs sicher zu vermeiden, ist zweckmä-ßigerweise ein radial abstehender Flammenabweiser im unteren Bereich des Steigrohrs vorgesehen. Damit kann ein Brand auch dann nicht, wenn er ausgeprägte Flammen aufweist, die erfindungsgemäße Manschette überspringen. Besonders bewährt hat es sich, wenn der Flammenabweiser um mindestens das Dreifache der Weite des Steigrohrs im unteren Bereich seitlich vorsteht. Damit wird erreicht, dass selbst wenn die Flammen noch seitlich um den Flammenabweiser herumlaufen, sie nicht mehr in Kontakt kommen mit dem weiteren Kabelverlauf ab dem oberen Ende des Steigrohrs. Eine Entzündung in diesem Bereich wird damit sicher verhindert. Der Flammenabweiser kann massiv ausgeführt sein, bspw. als eine entsprechend große Wandstärke des Steigrohrs im unteren Bereich. Bevorzugt ist es aber, wenn er als eine Scheibe ausgeführt ist. Damit kann bei geringem Gewicht eine große radial seitlich vorstehende Ausladung und damit guter Flammenschutz erreicht werden.

Es soll nicht ausgeschlossen sein, dass im unteren Bereich des Steigrohrs ebenfalls eine feuerfeste Dichtung vorgesehen ist. Allerdings ist es bevorzugt, wenn das Steigrohr nach unten offen ist. Denn dann kann der Brand in das Steigrohr einlaufen und ihm wird dort, aufgrund der umgebenden Masse des Steigrohrs als thermische Last, Wärmeenergie entzogen, so dass eine Selbstverlöschung des Brandes begünstigt wird.

Zweckmäßigerweise ist das Steigrohr gewinkelt ausgeführt. Vorzugsweise ist hierbei ein horizontaler Abschnitt in einem Mittelbereich vorgesehen, insbesondere durch Vorsehen einer zweiten gegensinnigen Abwinkelung. Durch diese Abwinkelung wird der Pfad des Kabels in dem Steigrohr aus der Vertikalen hinausgebracht, idealerweise bis hin in die Horizontale. Eine horizontale Anordnung begünstigt ein Selbstverlöschen des Brandes erheblich. Da horizontal selbstverlöschende Kabel handelsüblich erhältlich sind - im Gegensatz zu vertikal selbstverlöschenden Kabeln -, kann somit auf doppelte Weise ein Brandschutz gewährleistet werden.

Zweckmäßigerweise ist das Steigrohr so bemessen, dass seine Länge mindestens das Fünffache seiner Innenweite beträgt. Mit dieser Geometrie wird ein guter Kompromiss aus Umschließen des Kabels zur Abführung thermischer Energie einerseits und ausreichender Länge zum Verhindern eines Überspringens der Flammen andererseits bei nicht zu großem Gewicht erreicht.

Weiter vorzugsweise ist die feuerfeste Dichtung eine Multi-Dichtung für mehrere Kabel, vorzugsweise auch mit unterschiedlichem Durchmesser. Damit können Kabelbündel durch die erfindungsgemäße Manschette geführt und brandmäßig abgesichert werden. Der Aufwand zur Erreichung eines effektiven Brandschutzes wird damit auch bei umfangreichen Verkabelungen deutlich gesenkt.

Zweckmäßigerweise ist die Manschette mehrteilig ausgeführt. Bewährt hat sich insbesondere eine in Längsrichtung geteilte Manschette. Es kann somit der Innenraum geöffnet werden für ein seitliches Einbringen des mindestens einen Kabels. Damit ist die Manschette leicht auch an bereits installierten Kabeln anbringbar, wodurch auch eine Nachrüstung bereits bestehender Windenergieanlagen ermöglicht ist.

Die Erfindung erstreckt sich weiter auf eine Hängekabelmanschette für mindestens ein vertikal verlaufendes Kabel, wobei sie erfindungsgemäß stangenförmig ausgeführt ist und umfasst ein feuerfestes Steigrohr mit einer feuerfesten Dichtung in dessen oberen Bereich, durch welche das mindestens eine Kabel geführt ist, wobei die Breite des Steigrohrs so bemessen ist, dass das mindestens eine Kabel von einem Freiraum umgeben ist.

Weiter erstreckt sich die Erfindung auf eine Kabelführanlage für Windenergieanlagen mit einem langgestreckten Kabelkanal, dessen Innenraum zur Aufnahme von Kabeln vorgesehen ist, wobei erfindungsgemäß der Kabelkanal an mindestens einer Stelle unterbrochen ist und dort durch eine Hängekabelmanschette wie vorstehend beschrieben ersetzt ist. Beispielsweise kann der Kabelkanal als Gitterkorb ausgeführt sein.

Zur näheren Erläuterung wird auf vorstehende Beschreibung verwiesen.

Die Erfindung wird nachfolgend unter Bezugnahme auf die beigefügte Zeichnung näher erläutert, in der vorteilhafte Ausführungsbeispiele dargestellt sind. Es zeigen:
- Fig. 1:: eine Übersichtsdarstellung einer Windenergieanlage gemäß einem Ausführungsbeispiel der Erfindung;
- Fig. 2:: eine Detaildarstellung einer erfindungsgemäßen Manschette für das Ausführungsbeispiel gemäß Fig. 1;
- Fig. 3:: ein zweites Ausführungsbeispiel für eine erfindungsgemäße Manschette; und
- Fig. 4:: eine Kabelführungsanlage mit einer Manschette gemäß der Erfindung.

Die Erfindung wird erläutert anhand einer Windenergieanlage 1, die an sich konventionell aufgebaut ist. Sie umfasst einen Turm 10, auf dessen oberen Ende eine Gondel 11 schwenkbeweglich angeordnet ist. Sie ist an ihrer Stirnseite mit einem Windrotor 12 versehen, der über eine Antriebswelle einen in der Gondel 11 angeordneten Generator 13 antreibt zur Erzeugung elektrischer Energie. Der Generator 13 und der Betrieb der Windenergieanlage 1 insgesamt wird gesteuert von einer Betriebsführungseinheit 14. Die vom Generator 13 erzeugte elektrische Leistung wird über Leistungskabel 23 angeführt. Die Betriebsführungseinheit 14 steht über Signalkabel 24 in Verbindung mit der Außenwelt. Die Leistungskabel 23 sowie die Signalkabel 24 laufen im Inneren des Turms von dessen oberem Bereich, an dem die Gondel 11 angeordnet ist, bis nach unten zu dem Fuß des Turms 10.

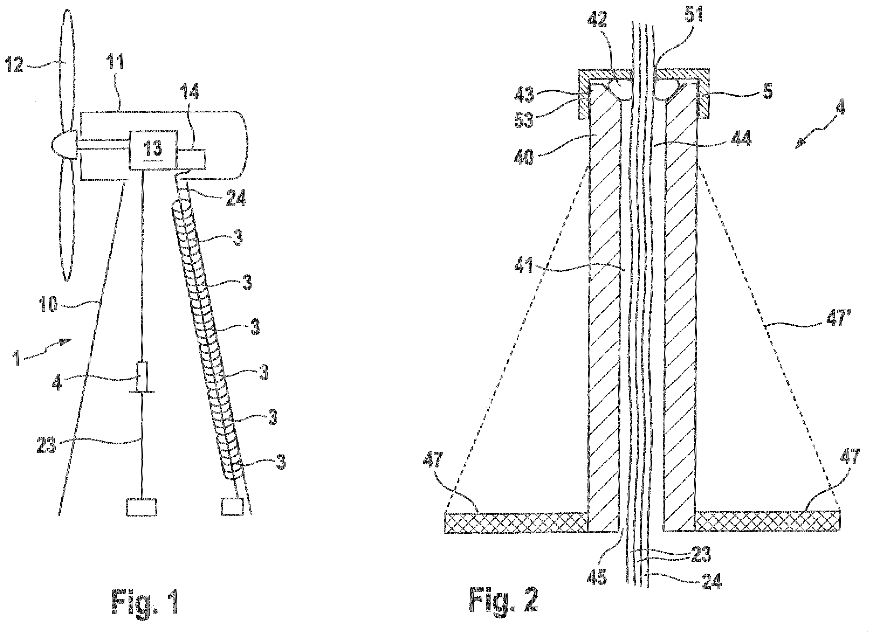

In Fig. 1 dargestellt ist eine an dem Strang für die Leistungskabel 23 montierte erfindungsgemäße Manschette 4. Eine Detaildarstellung ist als Schnittbild in Fig. 2 abgebildet. Danach umfasst die erfindungsgemäße Manschette 4 in der dort dargestellten ersten Ausführungsform ein zylinderförmiges Steigrohr 40, dessen Innenraum 41 zu einem unteren Ende 45 des Steigrohrs 40 hin offen ist. An dem oberen Ende des Steigrohrs 40 ist eine Befestigungskappe 5 aufgesetzt. Dazu ist am oberen Ende des Steigrohrs 40 an dessen Außenmantel eine Halterung 43 vorgesehen, die mit einer an der Innenseite der Befestigungskappe 5 angeordneten Befestigungseinrichtung 53 zusammenwirkt. Die Befestigungskappe 5 weist in ihrer Mitte eine Durchgangsöffnung 51 für einen Strang von Kabeln 23, 24 auf, wobei es sich um Leistungskabel 23 und/oder Signalkabel 24 handeln kann. Der Strang von Kabeln 23, 24 läuft durch die gesamte Manschette, d. h. er tritt am offenen unteren Ende 45 in den Innenraum 41 des Steigrohrs 40 ein und verlässt den Innenraum wieder über die Durchgangsöffnung 51 in der Befestigungskappe 5. Der Strang aus den Kabeln 23, 24 ist in dem Bereich der Befestigungskappe 5 von einer Dichtung 42 umgeben, welche den Kabelstrang gasdicht gegenüber der Befestigungskappe 5 und der Innenwandung des Steigrohrs 40 abdichtet. Diese Dichtung ist vorzugsweise aus flexiblem Material gefertigt, bspw. Ethylen-Propylen-Dien-Kautschuk (EPDM). Die Dichtung 42 ist feuerfest ausgeführt.

Die Manschette 4 mit ihrem Steigrohr 40 ist aus einem Metallmaterial, beispielsweise Stahl, ausgeführt. Sie kann zweiteilig ausgeführt sein, wobei sie vorzugsweise in Längsrichtung geteilt ist, so dass sich eine Teilungsfläche 44 entlang der Mittelachse ergibt.

An dem offenen unteren Ende 45 des Steigrohrs 40 ist eine radial zur Seite nach außen weisende Scheibe 47 angeordnet. Sie ist mit einer geringeren Wandstärke als die Wandung des Steigrohrs 40 ausgeführt. Sie besteht vorzugsweise aus demselben Material oder einem anderen feuerfesten und mechanisch hinreichend stabilen Material. Die Scheibe 47 fungiert als Flammenabweiser für Flammen, die durch einen von unten an dem Strang von Kabeln 23, 24 nach oben zur Manschette 4 hin laufenden Brand auf die Manschette 4 einwirken können. Es wird verhindert, dass die Flammen seitlich an dem Steigrohr 40 vorbei sich nach oben erstrecken. Die Abmessungen der Scheibe 47 sind so gewählt, dass diese flammenabschirmende Wirkung sicher erreicht ist.

Zur Erreichung der flammenabweisenden Wirkung ist es nicht zwingend, ein gesondertes Element wie die Scheibe 47 vorzusehen. Zum einen kann die Scheibe 47 einstückig mit dem Steigrohr 40 ausgeführt sein. Zum anderen kann sie aber auch als eine Verdickung des Steigrohrs 40 nach unten hin ausgeführt werden, bspw. durch eine sich stetig nach unten hin erhöhende Wandstärke. Eine derartige Ausführung ist mit gestrichelter Linie in Fig. 2 dargestellt.

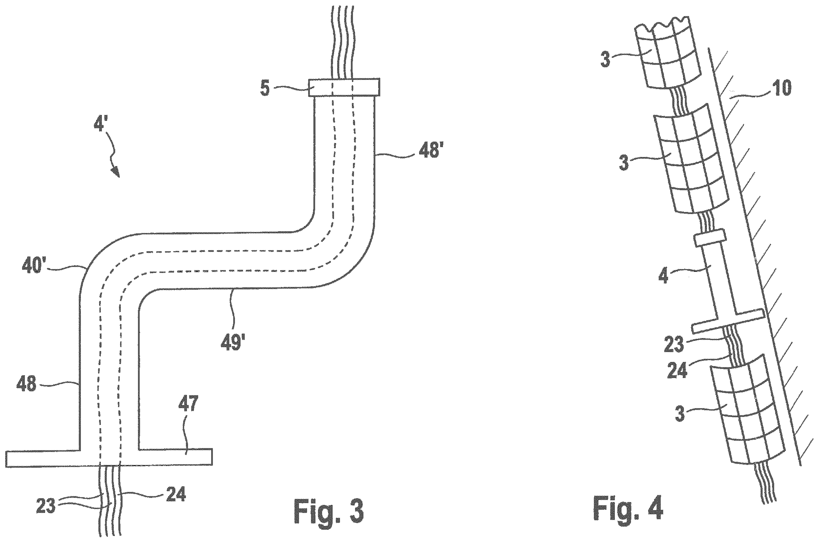

Eine zweite Ausführungsform der erfindungsgemäßen Manschette 4' ist in Fig. 3 dargestellt. Gleiche Komponenten sind mit denselben Bezugsziffern bezeichnet. Die Manschette 4' weist mehrere Abwinkelungen in dem Steigrohr 40' auf; in dem dargestellten Ausführungsbeispiel sind es zwei gegensinnige Abwinkelungen um 90°. Das Steigrohr 40' gliedert sich damit in einen ersten vertikalen Abschnitt 48, einen nach der ersten Abwinkelung liegenden horizontalen Abschnitt 49' und einen nach der zweiten Abwinkelung liegenden zweiten vertikalen Abschnitt 48'. Die Besonderheit dieser Ausführungsform liegt darin, dass der aus den Kabeln 23, 24 gebildete Kabelstrang in dem horizontalen Abschnitt 49' horizontal verläuft. Damit ist ein selbsttätiges Verlöschen der Kabel 23, 24 begünstigt. Sogenannte "horizontal selbstverlöschende Kabel" verlöschen bereits aufgrund ihrer Bauart; dank der abgewinkelten Gestaltung kann ggf. erreicht werden, dass sogar herkömmliche Kabel in diesem Abschnitt 49' sicher zum Verlöschen gebracht werden können. Die Erfindung kann damit auch bei preisgünstigeren Kabeln 23, 24 Verwendung finden, die nicht als "horizontal selbstlöschend" qualifiziert sind.

In Fig. 4 ist eine Ausführungsform für eine Windenergieanlagen-Kabelführanlage dargestellt. Sie umfasst einen aus mehreren Segmenten 3 gebildeten Gitterkorb für die Kabel 23, 24. Der Gitterkorb mit seinen Segmenten 3 ist bspw. an einer Innenwandung des Turms 10 befestigt. Erfindungsgemäß ist eines der Gitterkorbsegmente 3 ersetzt durch eine erfindungsgemäße Manschette 4. Damit wird auch bei einer nicht freihängenden Anordnung der Kabel 23, 24 der erfindungsgemäß wirksame Schutz vor Brandausbreitung entlang des Kabels auch in vertikaler Richtung erreicht.

## Patentansprüche

1. Hängekabelmanschette (4), die an einer Windenergieanlage (1) angeordnet ist, für mindestens ein vertikal verlaufendes Kabel (23, 24) der Windenergieanlage (1), **dadurch gekennzeichnet, dass** sie stangenförmig ausgeführt ist, umfassend ein feuerfestes Steigrohr (40) mit einem offenen unteren Ende (45) und einer feuerfesten Dichtung (42) in dessen oberen Bereich, durch welche das mindestens eine Kabel (23, 24) geführt ist, wobei eine Weite des Innenraums (41) des Steigrohrs (40) so bemessen ist, dass das mindestens eine Kabel (23, 24) von einem Freiraum umgeben ist.

2. Hängekabelmanschette nach Anspruch 1, **dadurch gekennzeichnet, dass** ein radial abstehender Flammenabweiser (47) im unteren Bereich des Steigrohrs (40) vorgesehen ist.

3. Hängekabelmanschette nach Anspruch 2, **dadurch gekennzeichnet, dass** der Flammenabweiser (47) mindestens um das Fünffache der Weite des Innenraums (41) seitlich vorsteht.

4. Hängekabelmanschette nach Anspruch 2 oder 3, **dadurch gekennzeichnet, dass** der Flammenabweiser (47) als Scheibe ausgeführt ist.

5. Hängekabelmanschette nach einem der vorangehenden Ansprüche, **dadurch gekennzeichnet, dass** das Steigrohr (40) gewinkelt ausgeführt ist.

6. Hängekabelmanschette nach Anspruch 5, **dadurch gekennzeichnet, dass** das Steigrohr (40') einen horizontalen Abschnitt (49') in einem Mittelbereich aufweist.

7. Hängekabelmanschette nach einem der vorangehenden Ansprüche, **dadurch gekennzeichnet, dass** das Steigrohr (40) mindestens fünfmal so lang wie weit ist.

8. Hängekabelmanschette nach einem der vorangehenden Ansprüche, **dadurch gekennzeichnet, dass** die Dichtung (42) eine Multi-Dichtung für mehrere Kabel (23, 24), vorzugsweise auch unterschiedlichen Durchmessers, ist.

9. Hängekabelmanschette nach einem der vorangehenden Ansprüche, **dadurch gekennzeichnet, dass** sie mehrteilig ausgeführt ist.

10. Hängekabelmanschette nach Anspruch 9, **dadurch gekennzeichnet, dass** sie in Längsrichtung geteilt ist, so dass der Innenraum öffenbar ist für ein seitliches Einbringen des mindestens einen Kabels.

11. Windenergieanlage mit einem Turm (10), einer an dessen oberen Ende angeordneten Gondel (11) mit einem Generator (13) und einem an deren Stirnseite drehbar angeordneten Rotor (12) zum Antrieb des Generators (13), wobei von einem Turmfuß mindestens ein Kabel (23, 24) zu dem oberen Turmende verläuft,
**dadurch gekennzeichnet, dass**
eine Hängekabelmanschette (4) nach einem der Ansprüche 1 bis 10 um das mindestens eine Kabel (23, 24) vorgesehen ist.

12. Kabelführanlage mit langgestrecktem, vorzugsweise aus Segmenten (3) zusammengesetztem Kabelkanal, in dessen Innerem mindestens ein Kabel (23, 24) geführt ist, **dadurch gekennzeichnet, dass** der Kabelkanal an mindestens einer Stelle unterbrochen und dort durch eine Hängekabelmanschette nach einem der Ansprüche 1 bis 10 ersetzt ist.

13. Kabelführanlage nach Anspruch 12, **dadurch gekennzeichnet, dass** die Segmente (3) als Gitterkorb ausgeführt sind.

## Claims

1. Hanging cable sleeve (4), arranged at a wind turbine (1), for at least one vertically extending cable (23, 24) of the wind turbine (1), **characterized in that** said hanging cable sleeve is of rod-shaped form, comprising a fire-resistant rising tube (40) having an open lower end (45) and having a fire-resistant seal (42) in the upper region thereof, through which seal the at least one cable (23, 24) is guided, wherein a width of the interior space (41) of the rising tube (40) is such that the at least one cable (23, 24) is surrounded by a clearance.

2. Hanging cable sleeve according to Claim 1, **characterized in that** a radially projecting flame deflector (47) is provided in the lower region of the rising tube (40).

3. Hanging cable sleeve according to Claim 2, **characterized in that** the flame deflector (47) projects laterally at least by five times the width of the interior space (41).

4. Hanging cable sleeve according to Claim 2 or 3, **characterized in that** the flame deflector (47) is in the form of a disc.

5. Hanging cable sleeve according to one of the preceding claims, **characterized in that** the rising tube (40) is of angled form.

6. Hanging cable sleeve according to Claim 5, **characterized in that** the rising tube (40') has a horizontal portion (49') in a middle region.

7. Hanging cable sleeve according to one of the preceding claims, **characterized in that** the rising tube (40) is at least five times as long as it is wide.

8. Hanging cable sleeve according to one of the preceding claims, **characterized in that** the seal (42) is a multi-seal for multiple cables (23, 24), preferably also of differing diameter.

9. Hanging cable sleeve according to one of the preceding claims, **characterized in that** said hanging cable sleeve is of multi-part form.

10. Hanging cable sleeve according to Claim 9, **characterized in that** said hanging cable sleeve is split in the longitudinal direction, so that the interior space can be opened for lateral introduction of the at least one cable.

11. Wind turbine having a tower (10), having a nacelle (11) which is arranged on the top end of said tower and has a generator (13) and has a rotor (12) for driving the generator (13), which rotor is arranged rotatably on the face side of said nacelle, wherein at least one cable (23, 24) extends from a base of the tower to the upper end of the tower,
**characterized in that**
a hanging cable sleeve (4) according to one of Claims 1 to 10 is provided around the at least one cable (23, 24).

12. Cable guidance system having an elongate cable duct in whose interior at least one cable (23, 24) is guided, said cable duct preferably being made up of segments (3), **characterized in that** the cable duct is interrupted at at least one position and, there, is replaced by a hanging cable sleeve according to one of Claims 1 to 10.

13. Cable guidance system according to Claim 12, **characterized in that** the segments (3) are in the form of a lattice cage.

## Revendications

1. Manchon de câble suspendu (4) qui est disposé sur une éolienne (1), destiné à au moins un câble de l'éolienne (1) s'étendant verticalement (23, 24),
**caractérisé en ce qu'**il est réalisé en forme de barre, comprenant une colonne montante résistante au feu (40), dotée d'une extrémité inférieure ouverte (45) et d'un joint d'étanchéité résistant au feu (42) dans la partie supérieure de celle-ci, à travers laquelle est guidé ledit au moins un câble (23, 24), une largeur de l'espace intérieur (41) de la colonne montante (40) étant dimensionnée de telle sorte que ledit au moins un câble (23, 24) est entouré d'un espace libre.

2. Manchon de câble suspendu selon la revendication 1, **caractérisé en ce qu'**un déflecteur de flammes (47) faisant saillie radialement est prévu dans la partie inférieure de la colonne montante (40).

3. Manchon de câble suspendu selon la revendication 2, **caractérisé en ce que** le déflecteur de flammes (47) fait saillie latéralement d'au moins cinq fois la largeur de l'espace intérieur (41).

4. Manchon de câble suspendu selon la revendication 2 ou 3, **caractérisé en ce que** le déflecteur de flammes (47) est réalisé sous forme de disque.

5. Manchon de câble suspendu selon l'une quelconque des revendications précédentes, **caractérisé en ce que** la colonne montante (40) est réalisée de manière coudée.

6. Manchon de câble suspendu selon la revendication 5, **caractérisé en ce que** la colonne montante (40') présente une section horizontale (49') dans une partie centrale.

7. Manchon de câble suspendu selon l'une quelconque des revendications précédentes, **caractérisé en ce que** la colonne montante (40) est au moins cinq fois plus longue que large.

8. Manchon de câble suspendu selon l'une quelconque des revendications précédentes, **caractérisé en ce que** le joint d'étanchéité (42) est un joint d'étanchéité multiple pour plusieurs câbles (23, 24), de préférence même de diamètres différents.

9. Manchon de câble suspendu selon l'une quelconque des revendications précédentes, **caractérisé en ce qu'**il est réalisé en plusieurs pièces.

10. Manchon de câble suspendu selon la revendication 9, **caractérisé en ce qu'**il est séparé dans la direction longitudinale de sorte que l'espace intérieur peut être ouvert pour une introduction latérale dudit au moins un câble.

11. Eolienne comprenant une tour (10), une nacelle (11) disposée à l'extrémité supérieure de celle-ci, dotée d'un générateur (13) et d'un rotor (12) disposé en rotation sur la face avant de celle-ci pour entraîner le générateur (13), au moins un câble (23, 24) s'étendant à partir d'un pied de la tour jusqu'à l'extrémité supérieure de la tour,
**caractérisée en ce qu'**un manchon de câble suspendu (4) selon l'une quelconque des revendications 1 à 10 est prévu autour dudit au moins un câble (23, 24).

12. Installation de câblage comprenant une goulotte de câble allongée, de préférence composée de segments (3) à l'intérieur de laquelle est guidé au moins un câble (23, 24), **caractérisée en ce que** la goulotte de câble est interrompue à au moins un endroit et y est remplacée par un manchon de câble suspendu selon l'une quelconque des revendications 1 à 10.

13. Installation de câblage selon la revendication 12, **caractérisée en ce que** les segments (3) sont réalisés sous forme de cage grillagée.
